Europäisches Patentamt

European Patent Office

Office européen des brevets

(11) Publication number: **0 088 496**
**B1**

(12) ## EUROPEAN PATENT SPECIFICATION

(45) Date of publication of patent specification: **12.08.87**

(51) Int. Cl.⁴: **G 05 B 5/01,** G 05 B 11/16 //
G05B15/02, G05D9/12

(21) Application number: **83300375.9**

(22) Date of filing: **25.01.83**

(54) Feedback automatic control apparatus.

(30) Priority: **05.03.82 JP 35381/82**

(43) Date of publication of application:
**14.09.83 Bulletin 83/37**

(45) Publication of the grant of the patent:
**12.08.87 Bulletin 87/33**

(84) Designated Contracting States:
**DE FR GB**

(56) References cited:
**DE-A-2 422 869**
**DE-B-1 167 950**
**FR-A-2 309 913**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Sakashita, Ryuji c/o Mitsubishi Denki K. K.**
**Seigyoseisakusho, 1-2 Wadasaki-cho, 1-chome**
**Hyogo-ku Kobe-shi Hyogo-ken (JP)**

(74) Representative: **Wright, Peter David John et al**
**R.G.C. Jenkins & Co. 12-15, Fetter Lane**
**London EC4A 1PL (GB)**

Courier Press, Leamington Spa, England.

## Description

The present invention relates to a feedback automatic control apparatus. More specifically, the present invention relates to a feedback automatic control apparatus adapted to perform feedback control such that the value of a controlled parameter is controlled with reference to a target value.

For example, there is known a feedback automatic control apparatus adapted to control the opening or closing of a gate such that the water level of a dam in a hydraulic power generating station is controlled to a target value.

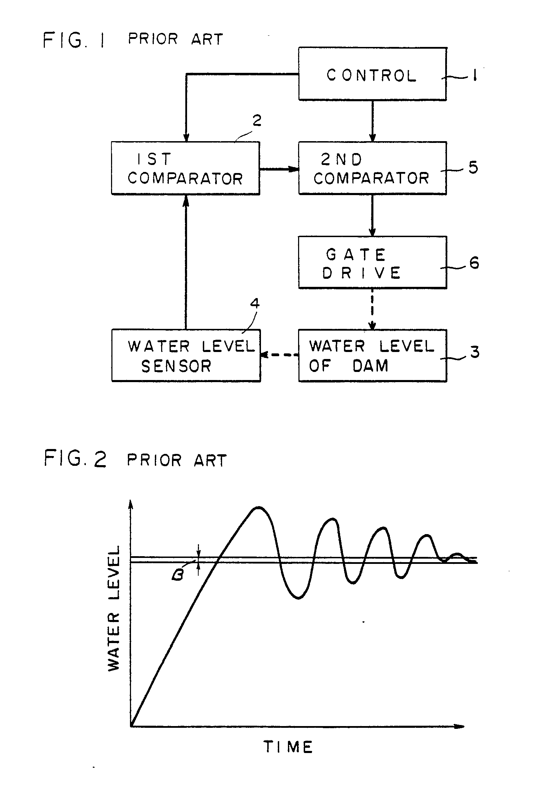

A conventional feedback automatic control apparatus will now be described with reference to Figures 1 and 2 of the accompanying drawings, in which:

Fig. 1 is a block diagram of the conventional apparatus; and

Fig. 2 is a graph showing the change of the controlled value with time.

Referring to Fig. 1, a control portion 1 is adapted to set in a first comparator 2 a target value of the water level of a dam and is also adapted to set in a second comparator 5 a dead zone adjacent the target value, having a predetermined width β. The water level is deemed to have reached the target value, and the opening and closing of a gate (not shown) is discontinued, if and when the water level of the dam is within the dead zone of width β. The first comparator 2 is supplied with a detection signal from a water level sensor 4, which detects the actual water level 3 of the dam. The first comparator 2 compares the target value and the actual water level, thereby to evaluate a deviation value to provide the same to the second comparator 5. The second comparator 5 compares the dead zone as set and the deviation obtained from the first comparator 2, so that an operation command signal is applied to a gate driving circuit 6 so that the deviation may be decreased. Accordingly, the gate driving circuit 6 controls the gate of the dam to open/close the same, thereby to change the amount of the water flowing out.

Fig. 2 is a graph showing the change in value of the controlled parameter with time in the Fig. 1 conventional feedback automatic control apparatus. Now an operation of the conventional feedback automatic control apparatus will be described. The control portion 1 sets in the second comparator 5 a dead zone having a predetermined width β shown in Fig. 2 and provides the first comparator 2 with a target value which is the upper limit of the dead zone. The first comparator 2 compares the water level detected by a water level sensor 4 at the start of control and the target value, thereby to evaluate a deviation. The second comparator 5 compares the deviation supplied from the first comparator 2 and the dead zone, thereby to provide the gate driving circuit 6 with an operation command signal associated with the deviation, if and when the detected water level is not within the dead zone. The gate driving circuit 6 is responsive to the operation command signal to open/close the gate, thereby to adjust the water level of the dam. If and when the water level of the dam is within the range of the width β of the dead zone, an operation command signal is supplied from the second comparator 5 to the gate driving circuit 6, thereby to discontinue the controlling of the opening/closing of the gate.

Since a conventional feedback automatic control apparatus is adapted such that a dead zone having a predetermined width β is set at the start of control and the gate is opened/closed such that the water level is to become a target value by the controlled opening/closing of the gate without changing the set dead zone, it follows that gate opening/closing operations are frequently performed. More specifically, in the case where the width β of the dead zone as set is narrow, whenever the water level (as the controlled parameter) as detected by the water level sensor 4 varies slightly from the target value it leaves the dead zone, with the result that the gate is opened or closed frequently. Furthermore, there is also a disadvantage that at the start of the control, as shown in Fig. 2, an overshoot of the value of the controlled parameter with respect to the target value occurs.

By increasing the width β of the dead zone, the frequency of opening/closing the gate is decreased; however, the control operation could be in a stable state in cases when the actual water level differs from the target value, in which case a disadvantage is involved that accuracy of the actual water level with respect to the target value is degraded.

Accordingly, a principal object of the present invention is to provide a feedback control system with a reduced overshoot of a control parameter with respect to a target value at the start of control and which is capable of stabilizing control of the parameter in a steady state.

It is proposed to set at the start of control a first dead zone including a target value and having a relatively wide width, and control the value of the controlled parameter with respect to this first dead zone. Subsequently a second dead zone having a width narrower than that of the first dead zone is set and the value of the controlled parameter is controlled with respect to the second dead zone.

Since the width of the dead zone is selected to be broader when control is initiated, the overshoot of the controlled parameter with respect to the target value can be reduced. Accordingly, the frequency of operation of a machine being controlled can be reduced at the beginning of the controlling. Furthermore, since the width of the dead zone is subsequently selected to be narrower, the controlled value in the steady state after start-up can be made to correspond approximately to the target value by bringing it into the narrower dead zone, whereas the precision of the control can be enhanced.

It has been proposed, in DE—AS 1,167,950, to vary the dead zone width in response to variations in the value of the controlled parameter. However, this proposal is not concerned with the problem of overshoot at the initiation of control. Rather, it is concerned to minimise the number of control operations during a stable steady state but to respond effectively to deviations from the dead zone. Accordingly it proposes that the dead zone should be wide while the deviations are small, to avoid unnecessary control actions, but that the dead zone should be narrow when the deviations are large, to minimise the dead time in the control of oscillations. This is directly contrary to the theory of the present invention, which holds that it is desirable for the dead zone to be wide at start-up and narrow in the steady state.

According to the present invention there is provided a method of automatic feedback control in which, following the initiation control, the value of a controlled parameter is brought substantially to and then maintained substantially at target value by reference to repeated determination of whether the value of the parameter lies within a dead zone in the region of the target value, control action being taken if the value of the parameter lies outside the dead zone to bring the value of the parameter into the dead zone, characterised in that a first dead zone width is set at the initiation of control, and subsequently the width of the dead zone is reduced to a second dead zone width narrower than the first.

In another aspect of the present invention there is provided feedback automatic control apparatus for bringing the value of a controlled parameter substantially to a target value following the initiation of control, and then maintaining the value of the controlled parameter substantially at the target value, the apparatus having:

means for defining a dead zone in the region of the target value;

means for determining whether the value of the parameter lies within the dead zone defined by the said defining means; and

means for providing control action to alter the value of the parameter if the determining means determines that the value of the parameter lies outside the dead zone, characterised in that the said defining means is operable to define a dead zone of a first width at the initiation of control but to reduce the width of the defined dead zone subsequently to a second dead zone width narrower than the first.

Preferably the reduction in the width of the dead zone occurs over a period of time, and the amount when the said reduction in the width of the dead zone begins is determined in dependence on the rate of change of the value of the said parameter.

More preferably, the reduction in the width of the dead zone occurs in a series of stages, each stage comprising the reduction of the width of the dead zone from a first amount to a second, smaller, amount, the first amount in the first stage being the said first dead zone width and the second amount in the last stage being the said second dead zone width.

In a preferred embodiment of the present invention, the first dead zone width is supplied to a second comparing means at the start of control and at the same time the target value and the detected value of the parameter are compared by a first comparing means, thereby to evaluate the deviation, whereupon the deviation and the first dead zone width are compared by the second comparing means, whereby the value of the controlled parameter is controlled so that the deviation may be decreased. Based on the time dependent change of the current value of the parameter and the target value, the start time for decreasing the width of the dead zone and the time period to elapse between successive reductions in the width of the dead zone for each dead zone width are set in a timer means. When the timer means has counted out the decrease start time, the decrease of the width of the dead zone is started. Then at the output from the timer means at the end of each time period, the width of the dead zone is gradually decreased through a succession of predetermined widths until the second dead zone width is reached. The second comparing means controls the parameter to bring its deviation within the successively decreasing dead zone.

Therefore, according to the preferred embodiment of the present invention, the start time for decreasing the width of the dead zone and the time period for each decreasing predetermined width can be changed based on the time dependent change of the current value of the controlled parameter and the target value and, if and when the change of the value of the parameter is rapid, the decrease of the width of the dead zone can be made slowly, while conversely if and when a change of the control amount is slow, the decrease of the width of the dead zone can be made rapidly. Thus, according to the preferred embodiment of the present invention, the parameter being controlled can be controlled in adaptation to a change in its current value.

An embodiment of the present invention, given by way of example, will now be described with reference to the accompanying drawings, in which:

Fig. 1 is a block diagram of a conventional feedback automatic control apparatus;

Fig. 2 is a graph showing the change of the controlled value with time in the conventional feedback automatic control apparatus of Fig. 1;

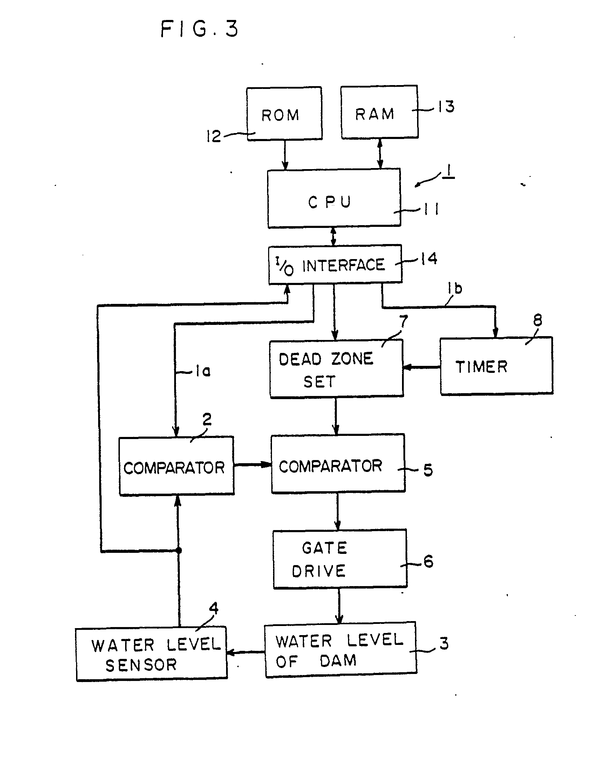

Fig. 3 is a block diagram of one embodiment of the present invention;

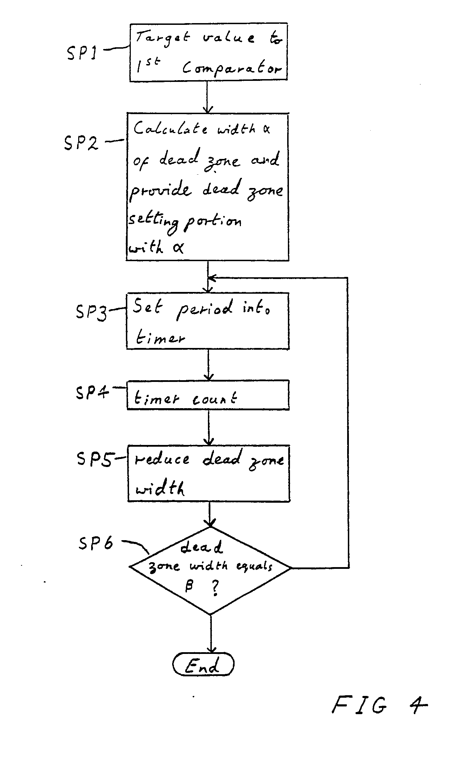

Fig. 4 is a flow diagram showing the reduction in dead zone width during the operation of the embodiment of Fig. 3; and

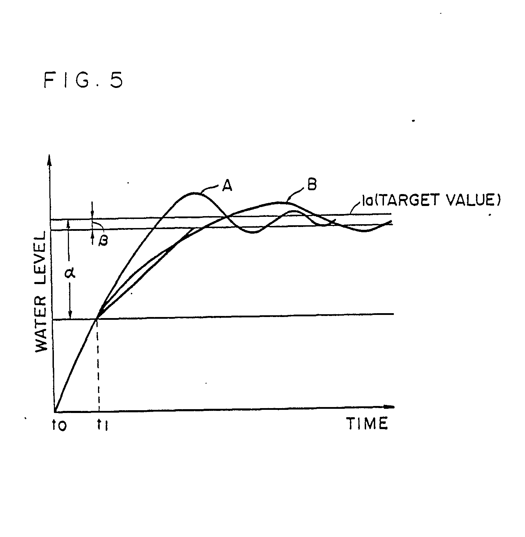

Fig. 5 is a graph showing the change of the controlled value with time in the Fig. 3 feedback automatic control apparatus.

Fig. 3 is a block diagram of one embodiment of the present invention. The Fig. 3 embodiment comprises a control portion 1 implemented by a microcomputer and further comprises a dead zone setting portion 7 and a timer circuit 8, while the remaining portions may be the same as those shown in Fig. 1. The control portion 1 comprises a central processing unit 11, a read only memory 12, a random access memory 13, and an input/output interface 14. The central processing unit 11 is supplied with the current water level from a water level sensor 4 through the input/output interface 14. The read only memory 12 is provided for storing a program necessary for performing feedback control. The random access memory 13 is provided for storing data concerning the current water level supplied from the water level sensor 4 and for storing the data concerning the result of an arithmetic operation. The central processing unit 11 makes an arithmetic operation of the first (relatively large) dead zone width, the dead zone having its upper limit value at the target value, in accordance with the program stored in the read only memory 12. The read only memory 12 stores in advance the second dead zone width $\beta$ narrower than the first. The dead zone setting portion 7 is provided for storing the first and second dead zone widths obtained from the control portion 1 and comprises a shift register, for example. The timer circuit 8 is supplied with an operation enable signal from the control portion 1 when control is initiated. The timer circuit 8 starts a time count operation in response to the operation enable signal and provides a time output signal to the dead zone setting portion after the lapse of a predetermined time period. If and when the dead zone setting portion 7 is supplied with the time output signal from the timer circuit 8, the dead zone setting portion 7 provides the comparator 5 with the next value for the dead zone width in the gradual decrease in the width from $\alpha$ to $\beta$.

Fig. 4 is a flow diagram showing the reduction in dead zone width during the operation of the embodiment of Fig. 3, and Fig. 5 is a graph showing the change of the controlled value with time in the Fig. 3 feedback automatic control apparatus.

Now referring to Figs. 3 to 5, the specific operation of one embodiment of the present invention will be described. First at the time 10 when control is initiated (as shown in Fig. 5), the central processing unit 11 (Fig. 3) provides the first comparator 2 with a target value 1a obtained from the exterior and also provides the timer circuit 8 with the operation enable signal 1b, in step SP1 (Fig. 4). In step SP2 the central processing unit 11 is responsive to the detected output from the water level sensor 4 obtained through the input/output interface 14 and the target value 1a to evaluate the width $\alpha$ of the dead zone at the beginning (the first dead zone width), thereby to provide the dead zone setting portion 7 with the evaluated result through the input/output interface 14.

The first comparator 2 compares the target value 1a and the detected output from the water level sensor 4, thereby to determine whether the current water level value corresponds with the target value. If and when the current water level value does not correspond with the target value, the deviation between the current water level value and the target value are evaluated and the deviation value is applied to the second comparator 5. The second comparator 5 compares the first dead zone width $\alpha$ set in the dead zone setting portion 7 and the deviation, thereby to provide a gate drive circuit 6 with the operation enable signal, if and when the deviation exceeds the width $\alpha$ of the dead zone. Also, the second comparator 5 provides an operation enable signal such that the gate of the dam is opened if and when the current water level is higher than the target value. As a result, the gate of the dam is opened and the water level is decreased. The control amount at that time, i.e. the opening/closing amount of the gate is increased abruptly as shown in Fig. 5.

The central processing unit 11 evaluates the time dependent change of the current water level supplied from the water level sensor 4. Then the central processing unit 11 is responsive to the target value 1a, the width of the dead zone and the time dependent change of the water level to set in timer circuit 8 a period to define the time $t$, for starting to decrease the width of the dead zone to the width $\beta$ of the second dead zone, and the time period between one reduction in the dead zone width and the next in step SP3. When the time period set in the timer circuit 8 is counted out in step SP4, an output signal is supplied to the dead zone setting portion 7. In response, the dead zone setting portion 7 starts the decrease of the width of the dead zone in step SP5. More specifically, after the timer circuit 8 provides the above described output signal, the output signal is applied to the dead zone setting portion 7 again, each time the time period between reductions set as described previously is counted out in the step SP4. Each time the output signal is supplied from the timer circuit 8, the dead zone setting portion 7 decreases the width of the dead zone to the next successive predetermined width in step SP5 until the width is reduced to $\beta$ in step SP6. The purpose is to decrease the frequency of the gate being opened or closed by making the periods for decreasing the width of the dead zone long when the detected water level is changed rapidly, and to shorten the period for decreasing the width of the dead zone when the change of the water level is, conversely, slow.

The second comparator 5 determines whether the deviation obtained from the first comparator 2 is in the current width of the dead zone. If and when the deviation is not within the width of the dead zone, an operation enable signal is applied to the gate driving circuit 6 so as to return the deviation to fall within the width of the dead zone. If and when the current water level becomes approximately equal to the target value (i.e. it is within the dead zone), the second comparator 5 provides a zero operation enable signal.

Therefore, according to the embodiment shown, if and when the value of the controlled parameter rises rapidly at the start of control as shown in Fig. 5 so that it crosses the relatively large first dead zone width and exceeds the target value 1a, the parameter is decreased; however, since the subsequent decreased value of the controlled parameter lies within the width α of the dead zone, the value of the controlled parameter will not greatly exceed the target value 1a even if it increases again. Accordingly, overshoot of the controlled parameter with respect to the target value at the start of control as shown in Fig. 2 can be decreased and therefore the frequency of operation of the machine being controlled can be decreased.

In a steady state after the start of control, the gate is controlled so that the water level at that time may fall within the narrower dead zone width β, and the water level can be made to correspond approximately with the target value, whereby the accuracy of control can be enhanced. Furthermore, since the time period when dead zone width is decreased from the first width α to the second width β can be changed in accordance with the change of the current water level, the object being controlled can be feedback controlled in the manner best adapted to the change of the water level.

Although the above described embodiment was described as embodied in a feedback automatic control apparatus for opening or closing a gate of a dam, the present invention is not limited to such application and the present invention can be applied to any other types of feedback automatic control apparatus.

## Claims

1. A method of automatic feedback control in which, following the initiation of control, the value of a controlled parameter is brought substantially to and then maintained substantially at a target value (1a) by reference to repeated determinations of whether the value of the parameter lies within a dead zone in the region of the target value (1a), control action being taken if the value of the parameter lies outside the dead zone to bring the value of the parameter into the dead zone, characterised in that a first dead zone width (α) is set at the initiation of control, and subsequently the width of the dead zone is reduced to a second dead zone width (β) narrower than the first.

2. A method according to claim 1, in which the said reduction in the width of the dead zone occurs over a period of time.

3. A method according to claim 2, in which the moment when the said reduction in the width of the dead zone begins is determined in dependence on the rate of change of the value of the said parameter.

4. A method according to claim 2 or claim 3, in which the said reduction in the width of the dead zone occurs in a series of stage, each stage comprising the reduction of the width of the dead zone from a first amount to a second, smaller, amount, the first amount in the first stage being the said first dead zone width (α) and the second amount in the last stage being the said second dead zone width (β).

5. A method according to any one of claims 2 to 4, in which the rate at which the width of the dead zone is reduced is dependent on the rate of change of the value of the controlled parameter, the rate at which the dead zone is reduced being less for greater rates of change in the controlled parameter and vice versa.

6. A method according to claim 5 as dependent on claim 4, in which the period which elapses between the reductions in the width of the dead zone in successive stages is dependent on the rate of change of the value of the controlled parameter, so as to provide the said dependence of the rate at which the dead zone is reduced.

7. A method according to any one of the preceding claims, in which the said first dead zone width (α) is determined in dependence on the target value (1a) and the value of the said parameter at the initiation of control.

8. Feedback automatic control apparatus for bringing the value of a controlled parameter substantially to a target value (1a) following the initiation of control, and then maintaining the value of the controlled parameter substantially at the target value (1a), the apparatus having:

means (1, 7) for defining a dead zone in the region of the target value;

means (2, 4, 5) for determining whether the value of the parameter lies within the dead zone defined by the said defining means; and

means (6) for providing control action to alter the value of the parameter if the determining means determines that the value of the parameter lies outside the dead zone, characterised in that the said defining means (1, 7) is operable to define a dead zone of a first width (α) at the initiation of control but to reduce the width of the defined dead zone subsequently to a second dead zone width (β) narrower than the first.

9. Feedback control apparatus in accordance with claim 8, wherein said defining means comprises means (12) for determining in advance the width of said second dead zone.

10. Feedback control apparatus in accordance with claim 8 or claim 9, wherein said defining means reduces the dead zone width in stages, each stage comprising the reduction of the width of the dead zone from a first amount to a second, smaller, amount, the first amount in the first stage being the said first dead zone width (α) and the second amount in the last stage being the said second dead zone width (β), the defining means comprising means (11) for determining the second amount of dead zone width in a said stage in accordance with the current value of said parameter and on said target value.

11. Feedback control apparatus in accordance with claim 10, wherein said defining means comprises timer means (8) responsive to a time dependent change of said parameter and to said target value for providing a timing signal to determine the period which elapses between the reductions in the width of the dead zone in successive stages.

12. Feedback control apparatus in accordance with any one of claims 8 to 11, wherein said determining means comprises

target value setting means (11) for setting said target value,

detecting means (4) for detecting the value of said parameter,

first comparing means (2) for comparing the output from said target value setting means and the output from said detecting means for providing a deviation value, and

second comparing means (5) for comparing the output from said first comparing means with the dead zone defined by the said defining means for providing a reference signal,

the said control action providing means (6) being responsive to said reference signal.

## Patentansprüche

1. Verfahren zur automatischen Rückkopplungsregelung, bei dem auf eine Initiierung der Regelung folgend der Wert eines geregelten Parameters im wesentlichen auf einen Zielwert (1a) gebracht wird und dort im wesentlichen gehalten wird durch Bezugnahme auf wiederholte Bestimmungen, ob der Wert des Parameters innerhalb einer Totzone in dem Bereich des Zielwertes (1a) liegt, wobei eine Regeltätigkeit unternommen wird, wenn der Wert des Parameters außerhalb der Totzone liegt, um den Wert des Parameters in die Totzone zu bringen, dadurch gekennzeichnet, daß eine erste Totzonenbreite (α) bei der Initiierung der Regelung eingestellt wird und daß darauffolgend die Breite der Totzone zu einer zweiten Totzonenbreite (β) reduziert wird, die schmaler als die erste ist.

2. Verfahren nach Anspruch 1, in dem die Reduktion der Breite der Totzone über einen Zeitraum geschieht.

3. Verfahren nach Anspruch 2, in dem der Zeitpunkt, bei dem die Reduktion der Breite der Totzone beginnt, in Abhängigkeit von der Rate der Änderung des Wertes des Parameters bestimmt wird.

4. Verfahren nach Anspruch 2 oder 3, in dem die Reduktion der Breite der Totzone in einer Reihe von Stufen geschieht, wobei jede Stufe aufweist: die Reduktion der Breite der Totzone von einem ersten Betrag zu einem zweiten, kleineren Betrag, wobei der erste Betrag in der ersten Stufe die erste Totzonenbreite (α) ist und der zweite Betrag der letzten Stufe die zweite Totzonenbreite (β) ist.

5. Verfahren nach einem der Ansprüche 2 bis 4, bei dem die Rate, um die die Breite der Totzone reduziert wird, abhängt von der Rate der Änderung des Wertes des geregelten Parameters, die Rate, mit der die Totzone reduziert wird, geringer ist für große Raten der Änderung in dem geregelten Parameter und umgekehrt.

6. Verfahren nach Anspruch 5 als von Anspruch 4 abhängend, bei dem die Zeitdauer, die zwischen den Reduktionen in der Breite der Totzone in auf-

einanderfolgenden Stufen vergeht, von der Rate der Änderung des Wertes des geregelten Parameters so abhängt, daß die Abhängigkeit der Rate, mit der die Totzone reduziert wird, vorgesehen wird.

7. Verfahren nach einem der vorhergehenden Ansprüche, in dem die erste Totzonenbreite (α) in Abhängigkeit von dem Zielwert (1a) und dem Wert des Parameters bei der Initiierung der Regelung bestimmt wird.

8. Automatisches Rückkopplungsregelgerät zum Bringen des Wertes eines geregelten Parameters im wesentlichen auf einen Zielwert (1a) nach der Initiierung der Regelung, und dann Halten des Wertes des geregelten Parameters im wesentlichen auf dem Zielwert (1a), wobei das Gerät aufweist:

eine Einrichtung (1, 7) zum Definieren einer Totzone in dem Bereich des Zielwertes,

eine Einrichtung (2, 4, 5) zum Bestimmen, ob der Wert des Parameters innerhalb der Totzone liegt, die durch die Definitionseinrichtung definiert ist, und

eine Einrichtung (6) zum Vorsehen einer Kontrolltätigkeit zum Ändern des Wertes des Parameters, wenn die Definitionseinrichtung bestimmt, daß der Wert des Parameters außerhalb der Totzone liegt,

dadurch gekennzeichnet, daß die Definitionseinrichtung (1, 7) betriebbar ist zum Definieren einer Totzone einer ersten Breite (α) bei der Initiierung der Regelung, aber zum darauffolgenden Reduzieren der Breite der definierten Totzone zu einer zweiten Totzonenbreite (β), schmaler als die erste.

9. Rückkopplungsregelgerät nach Anspruch 8, bei dem die Definitionseinrichtung eine Einrichtung (12) zum Bestimmen der Breite der zweiten Totzone im voraus aufweist.

10. Rückkopplungsregelgerät nach Anspruch 8 oder 9, in dem die Definitionseinrichtung die Totzonenbreite in Stufen reduziert, wobei jede Stufe die Reduktion der Breite der Totzone von einem ersten Betrag zu einem zweiten, kleineren Betrag aufweist, der erste Betrag in der ersten Stufe gleich der ersten Totzonenbreite (α) ist und der zweite Betrag in der letzten Stufe die zweite Totzonenbreite (β) ist, die Definitionseinrichtung eine Einrichtung (11) zum Bestimmen des zweiten Betrages der Totzonenbreite in einer der Stufen in Übereinstimmung mit dem gegenwärtigen Wert des Parameters und des Zielwertes aufweist.

11. Rückkopplungsregelgerät nach Anspruch 10, bei dem die Definitionseinrichtung eine Zeitgebereinrichtung (8) aufweist, die auf eine zeitabhängige Änderung der Parameters und des Zielwertes zum Vorsehen eines Zeitsignales zum Bestimmen der Zeitdauer reagiert, die zwischen den Reduktionen in der Breite der Totzone in aufeinanderfolgenden Stufen abläuft.

12. Rückkopplungsregelgerät nach einem der Ansprüche 8 bis 11, in dem die Bestimmungseinrichtung aufweist:

eine Zielwerteinstelleinrichtung (11) zum Einstellen des Zielwertes,

eine Nachweiseinrichtung (4) zum Nachweis des Wertes des Parameters,

eine erste Vergleichseinrichtung (2) zum Vergleichen des Ausganges von der Zielwerteinstelleinrichtung und des Ausganges von der Nachweiseinrichtung zum Vorsehen eines Abweichwertes, und

eine zweite Vergleichseinrichtung (5) zum Vergleichen des Ausganges von der ersten Vergleichseinrichtung mit der Totzone, die durch die Definitionseinrichtung definiert ist zum Vorsehen eines Referenzsignales,

wobei die Einrichtung zum Vorsehen eines Regeltätigkeit (6) auf das Referenzsignal reagiert.

## Revendications

1. Un procédé d'asservissement dans lequel, à la suite du début de la commande, la valeur d'un paramètre commandé est amenée pratiquement à une valeur de consigne (1a) et est ensuite maintenue pratiquement à la valeur de consigne, en déterminant de façon répétée si la valeur du paramètre est contenue dans une zone insensible dans la région de la valeur de consigne (1a), une action de commande étant effectuée si la valeur du paramètre se trouve à l'extérieur de la zone insensible, pour amener la valeur du paramètre dans la zone insensible, caractérisé en ce que une première largeur de zone insensible (α) est fixée au début de la commande, et la largeur de la zone insensible est ensuite réduite à une seconde largeur de zone insensible (β), plus étroite que la première.

2. Un procédé selon la revendication 1, dans lequel la réduction de la largeur de la zone insensible s'effectue sur une certain durée.

3. Un procédé selon la revendication 2, dans lequel le moment auquel la réduction de la largeur de la zone insensible commence est déterminé sous la dépendance de la vitesse de variation de la valeur du paramètre précité.

4. Un procédé selon la revendication 2 ou la revendication 3, dans lequel la réduction de la largeur de la zone insensible s'effectue en une série d'étapes, chaque étape comprenant la réduction de la largeur de la zone insensible depuis une première valeur jusqu'à une seconde valeur inférieure, la première valeur dans la première étape étant la première largeur de zone insensible (α), et la seconde valeur dans la dernière étape étant la seconde largeur de zone insensible (β).

5. Un procédé selon l'une quelconque des revendications 2 à 4, dans lequel la vitesse à laquelle la largeur de la zone insensible est réduite dépend de la vitesse de variation de la valeur du paramètre commandé, et la vitesse à laquelle la zone insensible est réduite est plus faible pour des vitesses de variation plus élevées du paramètre commandé, et inversement.

6. Un procédé selon la revendication 5 rattachée à la revendication 4, dans lequel la durée qui s'écoule entre les réductions de la largeur de la zone insensible dans des étapes successives dépend de la vitesse de variation de la valeur du paramètre commandé, de façon à établir la dépendance précitée de la vitesse à laquelle la zone insensible est réduite.

7. Un procédé selon l'une quelconque des revendications précédentes, dans lequel la première largeur de zone insensible (α) est déterminée sous la dépendance de la valeur de consigne (1a), et de la valeur du paramètre précité au début de la commande.

8. Système d'asservissement destiné à modifier la valeur d'un paramètre commandé pour la faire coïncider pratiquement avec une valeur de consigne (1a) à la suite du début de la commande, et à maintenir ensuite la valeur du paramètre commandé pratiquement égale à la valeur de consigne (1a), le système comprenant:

des moyens (1, 7) destinés à définir une zone insensible dans la région de la valeur de consigne;

des moyens (2, 4, 5) destinés à déterminer si la valeur du paramètre est comprise dans la zone insensible définie par les moyens de définition; et

des moyens (6) destinés à exercer une action de commande pour modifier la valeur du paramètre si les moyens de détermination déterminent que la valeur du paramètre se trouve à l'extérieur de la zone insensible,

caractérisé en ce que on peut faire fonctionner les moyens de définition (1, 7) pour définir une zone insensible d'une première largeur (α) au début de la commande, mais à reduire ensuite la largeur de la zone insensible définie, pour la faire correspondre à une seconde largeur de zone insensible (β) plus étroite que la première.

9. Système d'asservissement selon la revendication 8, dans lequel les moyens de définition comprennent des moyens (12) destinés à déterminer à l'avance la largeur de la seconde zone insensible.

10. Système d'asservissement selon la revendication 8 ou la revendication 9, dans lequel les moyens de définition réduisent la largeur de zone insensible en plusieurs étapes, chaque étape correspondant à la réduction de la largeur de la zone insensible d'une première valeur à une seconde valeur inférieure, la première valeur dans la première étape étant la première largeur de zone insensible (α) et la seconde valeur dans la dernière étape étant la seconde largeur de zone insensible (β), les moyens de définition comprenant des moyens (11) destinés à déterminer la seconde valeur de largeur de zone insensible dans une étape, conformément à la valeur courante du paramètre précité et à la valeur de consigne précitée.

11. Système d'asservissement selon la revendication 10, dans lequel les moyens de définition comprennent des moyens temporisateurs (8) qui réagissent à une variation du paramètre au cours du temps et à la valeur de consigne en produisant un signal de temps destiné à déterminer la durée qui s'écoule entre les réductions de la largeur de la zone insensible dans des étapes successives.

12. Système d'asservissement selon l'une quelconque des revendications 8 à 11, caractérisé en ce que les moyens de détermination comprennent

des moyens de fixation de valeur de consigne (11) destinés à fixer la valeur de consigne,

des moyens de détection (4) destinés à détecter la valeur du paramètre,

des premiers moyens de comparaison (2) destinés à comparer le signal de sortie des moyens de fixation de valeur de consigne et le signal de sortie des moyens de détection, pour fournir une valeur d'écart, et

des seconds moyens de comparaison (5) destinés à comparer le signal de sortie des premiers moyens de comparaison avec la zone insensible définie par les moyens de définition, pour produire un signal de référence,

les moyens exerçant une action de commande (6) réagissant à ce signal de référence.

FIG. 1 PRIOR ART

```
                              ┌──────────────┐
              ┌───────────────│   CONTROL    │──── 1
              │               └──────┬───────┘
              │                      │
              ▼                      ▼
    ┌──────────────┐   2    ┌──────────────┐
    │     1ST      │        │     2ND      │──── 5
    │  COMPARATOR  │───────▶│  COMPARATOR  │
    └──────────────┘        └──────┬───────┘
           ▲                       │
           │                       ▼
           │                ┌──────────────┐
           │                │     GATE     │──── 6
           │                │    DRIVE     │
           │                └──────┬───────┘
           │         4             ┆
    ┌──────────────┐        ┌──────────────┐
    │ WATER LEVEL  │◀┈┈┈┈┈┈┈│ WATER LEVEL  │──── 3
    │   SENSOR     │        │   OF  DAM    │
    └──────────────┘        └──────────────┘
```

FIG. 2 PRIOR ART

WATER LEVEL

TIME

FIG.3

FIG 4

F I G . 5